# EUROPÄISCHE PATENTANMELDUNG

(11) **EP 1 862 685 A1**
(43) Veröffentlichungstag der Anmeldung: **05.12.2007**
(21) Anmeldenummer: 07009899.1
(22) Anmeldetag: 18.05.2007
(51) Int. Cl.: F16D 13/68, F16D 21/06

(54) **Drehmomentübertragungsanordnung für den Antriebsstrang eines Fahrzeugs**

(30) Priorität: 01.06.2006 DE 102006025530
(71) Anmelder: ZF FRIEDRICHSHAFEN AG, 88046 Friedrichshafen (DE)
(72) Erfinder: Peterseim, Michael, 97493 Bergrheinfeld (DE); Vogt, Sebastian, 97616 Bad Neustadt (DE)

(57) **Zusammenfassung**

Eine Drehmomentübertragungsanordnung für den Antriebsstrang eines Fahrzeugs, umfassend eine Doppelkupplungsanordnung (12) mit einer zentralen Widerlagerplatte (30) und an beiden axialen Seiten der Widerlagerplatte (30) jeweils einem Kupplungsbereich (32, 34), wobei jeder Kupplungsbereich (32, 34) eine Kupplungsscheibe (68, 70) umfasst und jede der Kupplungsscheiben (68, 70) mit einer von zwei koaxial zueinander angeordneten Abtriebswellen (64, 62) im Wesentlichen drehfest gekoppelt oder zu koppeln ist, wobei die Widerlagerplatte (30) einen radial innen liegenden Lagerungsbereich (84) aufweist, mit welchem sie bezüglich einer der Abtriebswellen (64, 62) gelagert ist, ist dadurch gekennzeichnet, dass wenigstens eine der Kupplungsscheiben (68, 70) zwischen einem radial äußeren Reibbereich (72, 74) und einem radial inneren Nabenbereich (76, 78) Axialbewegungsmittel (112, 94) umfasst, welche eine Relativaxialbewegung des Reibbereichs (72, 74) bezüglich des Nabenbereichs (76, 78) zulassen.

## Beschreibung

Die vorliegende Erfindung betrifft eine Drehmomentübertragungsanordnung für den Antriebsstrang eines Fahrzeugs, umfassend eine Doppelkupplungsanordnung mit einer zentralen Widerlagerplatte und an beiden axialen Seiten der Widerlagerplatte jeweils einem Kupplungsbereich, wobei jeder Kupplungsbereich eine Kupplungsscheibe umfasst und jede der Kupplungsscheiben mit einer von zwei koaxial zueinander angeordneten Abtriebswellen im Wesentlichen drehfest gekoppelt oder zu koppeln ist, wobei die Widerlagerplatte einen radial innen liegenden Lagerungsbereich aufweist, mit welchem sie bezüglich einer der Abtriebswellen gelagert ist.

Eine derartige Drehmomentübertragungsanordnung ist aus der deutschen Auslegeschrift 12 92 962 bekannt. Bei der Doppelkupplungsanordnung dieser bekannten Drehmomentübertragungsanordnung ist die zentrale Widerlagerplatte mit ihrem radial inneren Lagerungsbereich an der koaxial äußeren der beiden Abtriebswellen gelagert. Auf diesen Bereich, in welchem die Widerlagerplatte an dieser Abtriebswelle gelagert ist, folgt ein Verzahnungsbereich an der Abtriebswelle, mit welchem der Nabenbereich derjenigen Kupplungsscheibe, welche mit dieser koaxial äußeren Abtriebswelle drehfest gekoppelt ist, in Kämmeingriff steht. Um den Kupplungsbereich, dem diese Kupplungsscheibe zugeordnet ist, ausrücken bzw. einrücken zu können, ist diese Kupplungsscheibe bezüglich der damit drehfest gekoppelten Abtriebswelle in gewissem Ausmaß axial bewegbar. Diese axiale Bewegbarkeit wird durch die in Kämmeingriff stehenden Verzahnungen an der Abtriebswelle und am Nabenbereich ermöglicht. Um sicherzustellen, dass diese Kupplungsscheibe beim Ausrückvorgang tatsächlich auch eine zumindest geringfügige Axialbewegung durchführen kann und nicht auf der Abtriebswelle verkantet, weist der Nabenbereich dort, wo er in Wechselwirkung mit der Abtriebswelle steht, also dort, wo er die Verzahnung aufweist, eine vergleichsweise große axiale Erstreckung auf. Dies stellt eine zuverlässige axiale Führung ohne der Gefahr des Verkantens für diese Kupplungsscheibe sicher.

Es ist die Aufgabe der vorliegenden Erfindung, eine gattungsgemäße Drehmomenübertragungsanordnung so weiterzubilden, dass bei der Möglichkeit, eine verminderte axiale Baulänge zu realisieren, gleichwohl ein zuverlässiger Betrieb sichergestellt ist.

Erfindungsgemäß wird diese Aufgabe gelöst durch eine Drehmomentübertragungsanordnung für den Antriebsstrang eines Fahrzeugs, umfassend eine Doppelkupplungsanordnung mit einer zentralen Widerlagerplatte und an beiden axialen Seiten der Widerlagerplatte jeweils einem Kupplungsbereich, wobei jeder Kupplungsbereich eine Kupplungsscheibe umfasst und jede der Kupplungsscheiben mit einer von zwei koaxial zueinander angeordneten Abtriebswellen im Wesentlichen drehfest gekoppelt oder zu koppeln ist, wobei die Widerlagerplatte einen radial innen liegenden Lagerungsbereich aufweist, mit welchem sie bezüglich einer der Abtriebswellen gelagert ist.

Dabei ist weiter vorgesehen, dass wenigstens eine der Kupplungsscheiben zwischen einem radial äußeren Reibbereich und einem radial inneren Nabenbereich Axialbewegungsmittel umfasst, welche eine Relativaxialbewegung des Reibbereichs bezüglich des Nabenbereichs zulassen.

Bei der erfindungsgemäß aufgebauten Drehmomentübertragungsanordnung ist also bei zumindest einer der Kupplungsscheiben der Doppelkupplungsanordnung für eine Axialbeweglichkeit des Nabenbereichs bezüglich des Reibbereichs gesorgt. Dies bedeutet, dass zum Ausrücken und zum Aufheben des Reibschlusses des Reibbereichs mit der zentralen Widerlagerplatte nicht notwendigerweise die gesamte Kupplungsscheibe sich geringfügig axial bewegen können muss. Vielmehr kann bei beispielsweise axial feststehendem Nabenbereich auf Grund des Bereitstellens der Axialbewegungsmittel der radial außen liegende Reibbereich sich zumindest geringfügig axial bewegen und damit den Reibschluss mit der Widerlagerplatte aufheben. Dies wiederum hat zur Folge, dass insbesondere der Nabenbereich nicht mehr so gestaltet sein muss, dass zuverlässig für die erforderliche Axialbewegbarkeit desselben bezüglich der mit diesem gekoppelten Abtriebswelle gesorgt ist. Vielmehr kann der Nabenbereich insbesondere dort, wo er mit der ihm zugeordneten Abtriebswelle gekoppelt ist, mit vergleichsweise kurzer axialer Baulänge ausgestaltet werden, da selbst ein Verklemmen des Nabenbereichs bezüglich der mit ihm gekoppelten Abtriebswelle die Axialbewegbarkeit des Reibbereichs nicht beeinträchtigt. Auf Grund der Möglichkeit, diese Kupplungsscheibe axial kürzer auszugestalten, kann die gesamte axiale Baulänge der Doppelkupplungsanordnung bei gleichwohl erhaltener Betriebssicherheit vermindert werden.

Beispielsweise kann vorgesehen sein, dass wenigstens diejenige Kupplungsscheibe Axialbewegungsmittel aufweist, welche mit der einen der Abtriebswellen gekoppelt oder zu koppeln ist.

Bei einer baulich sehr einfach zu realisierenden, gleichwohl jedoch zuverlässig arbeitenden Ausgestaltungsform wird vorgeschlagen, dass die Axialbewegungsmittel am Reibbereich und am Nabenbereich jeweils eine Verzahnung umfassen, wobei bei hergestelltem Kämmeingriff der Verzahnungen der Reibbereich und der Nabenbereich zur gemeinsamen Drehung bei ermöglichter Relativaxialbewegung gekoppelt sind.

Der Lagerungsbereich der Widerlagerplatte kann axial folgend auf den Nabenbereich der mit der einen Abtriebswelle gekoppelten oder zu koppelnden Kupplungsscheibe an dieser einen Abtriebswelle gelagert sein. D.h., der Nabenbereich dieser Kupplungsscheibe und der Lagerungsbereich der Widerlagerplatte können axial sehr nahe beieinander liegen, einander ggf. sogar berühren oder bezüglich einander abstützen, da, wie vorangehend bereits dargelegt, eine Axialbewegbarkeit des Nabenbereichs dieser Kupplungsscheibe nicht mehr erforderlich ist.

Bei einer alternativen Ausgestaltungsvariante, die insbesondere hinsichtlich des leichteren Zusammenfügens der Doppelkupplungsanordnung vorteilhaft ist, wird vorgeschlagen, dass die mit der einen Abtriebswelle gekoppelte oder zu koppelnde Kupplungsscheibe einen Lagerungsabschnitt aufweist, an welchem der Lagerungsbereich der Widerlagerplatte gelagert ist. In diesem Falle können die Widerlagerplatte und diese Kupplungsscheibe als vormontierte Baugruppe vorgesehen werden, was beim Prozess des Zusammenfügens der Doppelkupplungsanordnung an sich vorteilhaft ist und insbesondere auch das Koppeln der Doppelkupplungsanordnung mit den Abtriebswellen erleichtert.

Um insbesondere auch bei Einleitung von Betätigungskräften eine definierte Positionierung der Doppelkupplungsanordnung sicherzustellen, wird vorgeschlagen, dass der Lagerungsbereich der Widerlagerplatte bezüglich der einen Abtriebswelle im Wesentlichen axial unbewegbar gehaltert ist.

Die eine Abtriebswelle, also diejenige Abtriebswelle, bezüglich welcher die Widerlagerplatte gelagert ist, kann beispielsweise die koaxial äußere Abtriebswelle sein.

Bei einer besonders bevorzugten Ausgestaltungsvariante wird vorgeschlagen, dass beide Kupplungsscheiben Axialbewegungsmittel aufweisen.

Um im Drehmomentübertragungsbetrieb auftretende Drehungleichförmigkeiten abfangen zu können, wird weiterhin ,vorgeschlagen, dass bei wenigstens einer Kupplungsscheibe radial innerhalb von daran vorgesehenen Axialbewegungsmitteln eine Torsionsschwingungsdämpferanordnung vorgesehen ist. Durch die Positionierung der Torsionsschwingungsdämpferanordnung radial innerhalb der Axialbewegungsmittel wird dafür gesorgt, dass die Axialbewegungsmittel vergleichsweise weit nach radial außen rücken. Dies bedeutet, dass bei einem bestimmten zu übertragenden Drehmoment die zwischen den Zahnflanken der Verzahnungen wirkende Reibkraft verringert ist und somit die axiale Bewegbarkeit des Reibbereichs bezüglich des Nabenbereichs leichter erhalten werden kann.

Die Doppelkupplungsanordnung kann mit einem Antriebsorgan über eine Schwungmassenanordnung gekoppelt oder zu koppeln sein, wobei diese Schwungmassenanordnung vorteilhafterweise als Torsionsschwingungsdämpferanordnung, beispielsweise Zweimassenschwungrad, ausgestaltet sein kann.

Ferner kann bei dem erfindungsgemäßen Aufbau vorgesehen sein, dass jeder Kupplungsbereich eine Druckplattenbaugruppe umfasst, wobei jede Druckplattenbaugruppe ein an der Widerlagerplatte festgelegtes oder festzulegendes Gehäuse, eine bezüglich des Gehäuses im Wesentlichen drehfest und axial bewegbare Anpressplatte sowie eine bezüglich der Anpressplatte und des Gehäuses abgestützte Kraftbeaufschlagungsanordnung umfasst.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Längsschnittansicht einer erfindungsgemäß aufgebauten Drehmomenübertragungsanordnung;
- Fig. 2: eine der Fig. 1 entsprechende Ansicht einer alternativ ausgestalteten Drehmomentübertragungsanordnung;
- Fig. 3: eine weitere der Fig. 1 entsprechende Ansicht einer alternativ ausgestalteten Drehmomentübertragungsanordnung;
- Fig. 4: eine Detailansicht, welche einen Teilbereich eines Betätigungssystems für einen der Kupplungsbereiche einer erfindungsgemäß aufgebauten Drehmomentübertragungsanordnung darstellt.

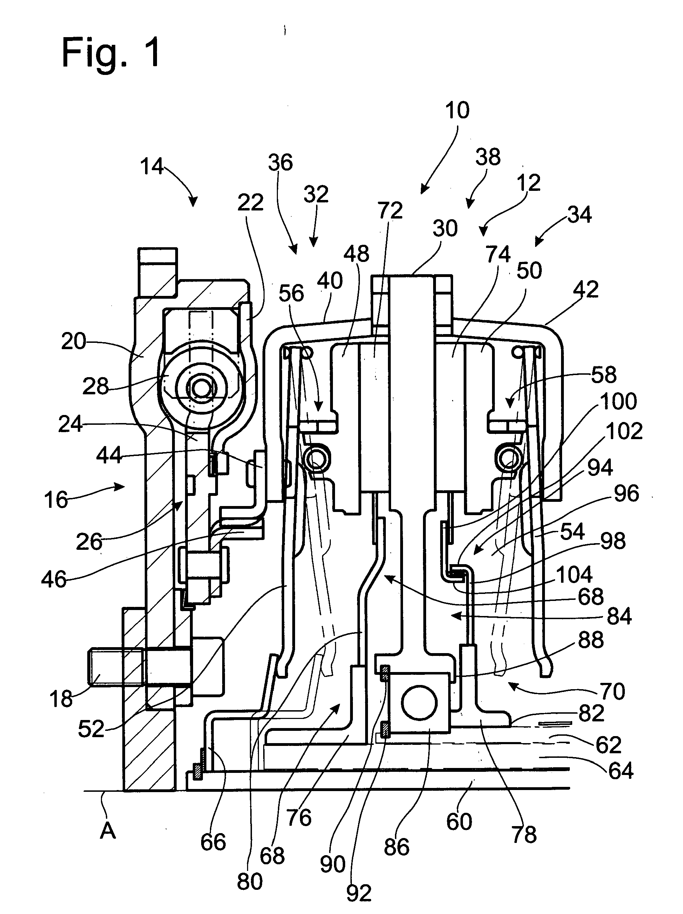

In Fig. 1 ist eine Drehmomentübertragungsanordnung allgemein mit 10 bezeichnet. Diese Drehmomentübertragungsanordnung umfasst zwei wesentliche Systembereiche. Einer davon ist eine Doppelkupplungsanordnung 12. Der andere dieser Systembereiche ist eine in Form eines Zweimassenschwungrads ausgestaltete Torsionsschwingungsdämpferanordnung 14. Diese ist mit einer Primärseite 16 ausgestaltet, die in einem radial inneren Bereich über eine Mehrzahl von Schraubbolzen 18 oder dergleichen an ein Antriebsorgan, beispielsweise eine Kurbelwelle einer Brennkraftmaschine, drehfest anzukoppeln ist. Die Primärseite 16 ist im Wesentlichen mit zwei Deckscheibenelementen 20, 22 aufgebaut, zwischen welche ein Zentralscheibenelement 24 einer Sekundärseite 26 der Torsionsschwingungsdämpferanordnung 14 eingreift. Zwischen der Primärseite 16 und der Sekundärseite 26 wirkt eine mehrere Dämpferfedern umfassende Dämpferelementenanordnung 28. Bei zu übertragenden Drehmomenten bzw. auftretenden Drehungleichförmigkeiten ermöglichen die Dämpferfedern der Dämpferelementenanordnung 28 eine Relativumfangsbewegung der Primärseite 16 bezüglich der Sekundärseite 26. Zusätzlich kann beispielsweise eine nicht weiter dargestellte Reibanordnung vorgesehen sein, so dass bei Auftreten von Drehungleichförmigkeiten auch Schwingungsenergie in definiertem Maße durch diese Reibung dissipiert werden kann. Es sei darauf hingewiesen, dass die Torsionsschwingungsdämpferanordnung 14 vorangehend nur mit Hinblick auf die wesentlichen konstruktiven Aspekte beschrieben wurde. Es ist selbstverständlich, dass diese in verschiedensten Aspekten variiert werden kann.

Die Doppelkupplungsanordnung 12 umfasst eine zentrale Widerlagerplatte 30 und an beiden axialen Seiten - axial bezogen auf eine Drehachse A des Gesamtsystems - davon jeweils einen Kupplungsbereich 32, 34. Die beiden Kupplungsbereiche 32, 34 sind vorzugsweise von im Wesentlichen gleichem Aufbau und lediglich seitenverkehrt an die zentrale Widerlagerplatte 30 angebunden. So umfasst jeder dieser Kupplungsbereiche 32, 34 eine Druckplattenbaugruppe 36 bzw. 38 mit einem im Wesentlichen topfartigen Gehäuse 40, 42. Radial außen sind diese beiden Gehäuse 40, 42 beispielsweise durch Schraubbolzen fest an die Widerlagerplatte 30 angebunden. An dem der Torsionsschwingungsdämpferanordnung 14 nahe liegend und somit an der einem Antriebsaggregat zugewandt und von einem Getriebe abgewandt liegenden Seite der Widerlagerplatte 30 vorgesehenen Gehäuse 40 ist ein beispielsweise ringartig ausgestaltetes Verzahnungselement 44 vorgesehen, welches mit einem entsprechenden Verzahnungselement 46 am Zentralscheibenelement 24 in Kämmeingriff steht oder bringbar ist. Auf diese Art und Weise ist eine drehfeste Kopplung zwischen der Doppelkupplungsanordnung 12 und der Torsionsschwingungsdämpferanordnung 14 bei gleichwohl ermöglichter Relativaxialbewegbarkeit realisiert.

Jeder der beiden Kupplungsbereiche 32, 34 bzw. jede der Druckplattenbaugruppen 36, 38 umfasst weiterhin eine Anpressplatte 48, 50. Diese Anpressplatten 48, 50 können beispielsweise über Tangentialblattfedern oder dergleichen mit dem zugehörigen Gehäuse 40 bzw. 42 oder der Widerlagerplatte 30 drehfest, jedoch axial beweglich gekoppelt sein. Die Kopplung mit den Gehäusen 40, 42 ist auf Grund des Bereitstellens der Druckplattenbaugruppen 36, 38 als vormontierte Baugruppen bevorzugt. Weiterhin weist jede der Druckplattenbaugruppen 36, 38 eine Kraftbeaufschlagungsanordnung 52 bzw. 54 auf. Diese können grundsätzlich nach Art einer Membranfeder aufgebaut sein und mit einer gewissen Vorspannung in die jeweilige Druckplattenbaugruppe 36 bzw. 38 integriert sein. Beide Kraftbeaufschlagungsanordnungen 52, 54 sind in ihrem radial äußeren Bereich bezüglich des jeweils zugeordneten Gehäuses 40, 42 axial abgestützt und können in einem radial weiter innen liegenden Bereich beispielsweise über eine jeweilige Verschleißkompensationsanordnung 56, 58 die zugehörige Anpressplatte 48, 50 beaufschlagen. Da bei einer derartigen Doppelkupplungsanordnung 12 im Allgemeinen nur über einen der Kupplungsbereiche 32, 34 ein Drehmoment zu übertragen ist, während der andere Kupplungsbereich in einem Ausrückzustand sein sollte, ist es vorteilhaft, die beiden Kupplungsbereiche 32, 34 als so genannte Normal-Offen-Kupplungen auszugestalten.

Dies kann dadurch realisiert werden, dass die beiden Kraftbeaufschlagungsanordnungen 52, 54 grundsätzlich in Ausrückrichtung vorgespannt sind, also in einer Richtung, in welcher sie die zugehörigen Anpressplatten 48, 50 freigeben. Zum Einrücken eines jeweiligen Kupplungsbereichs, also zum Beaufschlagen der Anpressplatten 48, 50 in Richtung auf die zentrale Widerlagerplatte 30 zu, kann dann radial innen über ein jeweils zugeordnetes Betätigungssystem an den Kraftbeaufschlagungsanordnungen 52, 54 angegriffen werden, um diese dort in Richtung auf die Widerlagerplatte 30 zuzubewegen und damit auch die Anpressplatten 48 bzw. 50 in der gleichen Richtung zu beaufschlagen. In der Fig. 1 ist in Zuordnung zur Kraftbeaufschlagungsanordnung 52 des Kupplungsbereichs 30 von diesem Bestätigungssystem ein stangenartiges Betätigungselement 60 erkennbar, das in einer zentralen Öffnung der koaxial inneren von zwei zueinander koaxial liegenden Getriebeeingangswellen 62, 64 verläuft, dargestellt. Das Betätigungselement 60 ist an seinem in Fig. 1 erkennbaren Ende mit einem topfartigen Übertragungselement 66 fest verbunden, das bei Bewegung des Bestätigungselements 60 in der Darstellung der Fig. 1 nach rechts, also in die koaxial innere Abtriebswelle bzw. Getriebeeingangswelle 64 hinein, den radial inneren Bereich der Kraftbeaufschlagungsanordnung 52 beaufschlagt und damit auch die Anpressplatte 48 in Richtung auf die Widerlagerplatte 30 zu bewegt.

Jeder Kupplungsbereich 32, 34 weist in Zuordnung zur jeweiligen Druckplattenbaugruppe 36, 38 weiterhin eine Kupplungsscheibe 68, 70 auf. Jede Kupplungsscheibe weist einen radial äußeren Reibbereich 72, 74 auf, der jeweils zwischen der zentralen Widerlagerplatte 30 und der zugehörigen Anpressplatte 48 oder 50 liegt und mithin dazwischen einspannbar ist. Radial innen weisen die Kupplungsscheiben 68, 70 jeweils einen Nabenbereich 76, 78 auf. Der Nabenbereich 76 der Kupplungsscheibe 68 ist auf der koaxial inneren Abtriebswelle bzw. Getriebeeingangswelle 64 abgestützt und, wie allgemein üblich, mit einer Verzahnung versehen, die mit einer entsprechenden Verzahnung am axialen Ende der Abtriebswelle 64 in Kämmeingriff steht und somit eine drehfeste Kopplung zwischen der Kupplungsscheibe 68 und dieser Abtriebswelle 64 realisiert, bei gleichwohl ermöglichter Relativaxialbewegbarkeit. Ein mit dem Nabenbereich 76 fest verbundenes oder ggf. integral ausgestaltetes Verbindungselement 80 trägt radial außen den Reibbereich 72, beispielsweise im Bereich einer nach radial innen greifenden Belagsfederung desselben.

Der Nabenbereich 78 der Kupplungsscheibe 70 ist auf der koaxial äußeren Abtriebswelle über eine an diesem Nabenbereich 78 vorgesehene Verzahnung in Kämmeingriff mit einer entsprechenden Verzahnung an dieser koaxial äußeren Abtriebswelle 62. Man erkennt, dass der Nabenbereich 78 in demjenigen Bereich, in welchem er in Wechselwirkung mit den zugehörigen Abtriebswellen, nämlich der koaxial äußeren Abtriebswelle 62 steht, axial deutlich kürzer ausgestaltet ist, als der Nabenbereich 76 der anderen Kupplungsscheibe 68. Weiterhin ist der Nabenbereich 78 axial abgestützt an einer Schulter 82 der Abtriebswelle 62 und somit in einer axialen Richtung bezüglich dieser Abtriebswelle 62 arretiert.

Die zentrale Widerlagerplatte 30 weist radial innen einen Lagerungsbereich 84 auf. Dieser Lagerungsbereich umfasst ein mit der Widerlagerplatte 30 axial festgekoppeltes Drehentkopplungslager 86, das zwischen einem festen Axialbewegungsanschlag 88 an der Widerlagerplatte 30 und einem an der Widerlagerplatte 30 festzulegenden Sicherungsring 90 axial arretiert ist. Das Drehentkopplungslager 86 ist weiterhin an der koaxial äußeren Abtriebswelle 62 in radial definierter Positionierung abgestützt, so dass über diesen Lagerungsbereich 84, insbesondere das Drehentkopplungslager 86 desselben, die Widerlagerplatte 30 an der koaxial äußeren Abtriebswelle 62 gelagert ist. Ein weiterer Sicherungsring 92 sichert das Drehentkopplungslager 86 und mithin die gesamte Widerlagerplatte 30 in axialer Richtung an der koaxial äußeren Abtriebswelle 62, wobei, wie man in Fig. 1 deutlich erkennt, zwischen diesem Sicherungsring 92 und der Schulter 82 an der Abtriebswelle 62 der Nabenbereich 78 der Kupplungsscheibe 70 und der Lagerungsbereich 84 bzw. das Drehentkopplungslager 86 axial definiert fixiert sind. D.h., das Drehentkopplungslager 86 und der Nabenbereich 78 liegen vorzugsweise in axialer Richtung aneinander an, so dass weder für die Widerlagerplatte 30, noch für den Nabenbereich 78 der Kupplungsscheibe 70 in diesem Bereich der Kopplung bzw. der Abstützung an der koaxial äußeren Abtriebswelle 62 eine wesentliche Axialbewegbarkeit ermöglicht ist.

Um auch beim Kupplungsbereich 34 die zum Durchführen von Ausrückvorgängen erforderliche Reibentkopplung des Reibbereichs 74 desselben von der Widerlagerplatte 30 realisieren zu können, weist die Kupplungsscheibe 70 zwischen dem Reibbereich 74 und dem Nabenbereich 78 Axialbewegungsmittel 94 auf. Man erkennt, dass ein den Nabenbereich 78 und den Reibbereich 74 verbindendes Verbindungselement 96 zweiteilig ausgebildet ist, wobei ein erstes Verbindungselemententeil 98 mit dem Nabenbereich 78 fest verbunden oder integral ausgestaltet ist, während ein zweites Verbindungselemententeil 100 mit dem Reibbereich 74, beispielsweise einer Belagsfederung, verbunden bzw. integral ausgebildet ist. Das Verbindungselemententeil 98 weist eine Verzahnung 102 auf, die mit einer Verzahnung 104 am Verbindungselemententeil 100 in Kämmeingriff steht. Man erkennt; dass im dargestellten Beispiel die beiden Verzahnungen 102, 104 an jeweils axial abgekrümmten Abschnitten der Verbindungselemententeile 98, 100 ausgebildet sind, wobei die Verzahnung 102 als Innenverzahnung und die Verzahnung 104 als Außenverzahnung ausgestaltet sind.

Diese Verzahnungen 102, 104 stellen eine drehfeste Verbindung zwischen dem Nabenbereich 78 und dem Reibbereich 74 her, ermöglichen jedoch auf Grund der axialen Erstreckung derselben eine Relativaxialbewegung zwischen dem Nabenbereich 78 und dem Reibbereich 74. Diese Axialrelativbewegbarkeit im Bereich der Axialbewegungsmittel 94 gestattet bei axial festgehaltenem Nabenbereich 78 bei Durchführung von Ein- bzw. Auskuppelvorgängen eine Axialbewegbarkeit des Reibbereichs 74. Da somit also eine Axialbewegbarkeit im Bereich des Nabenbereichs 78 nicht mehr erforderlich ist, kann dieser, wie dargestellt, axial arretiert werden und auch axial deutlich kürzer ausgestaltet werden, wodurch die Baulänge der Doppelkupplungsanordnung 12 vermindert werden kann.

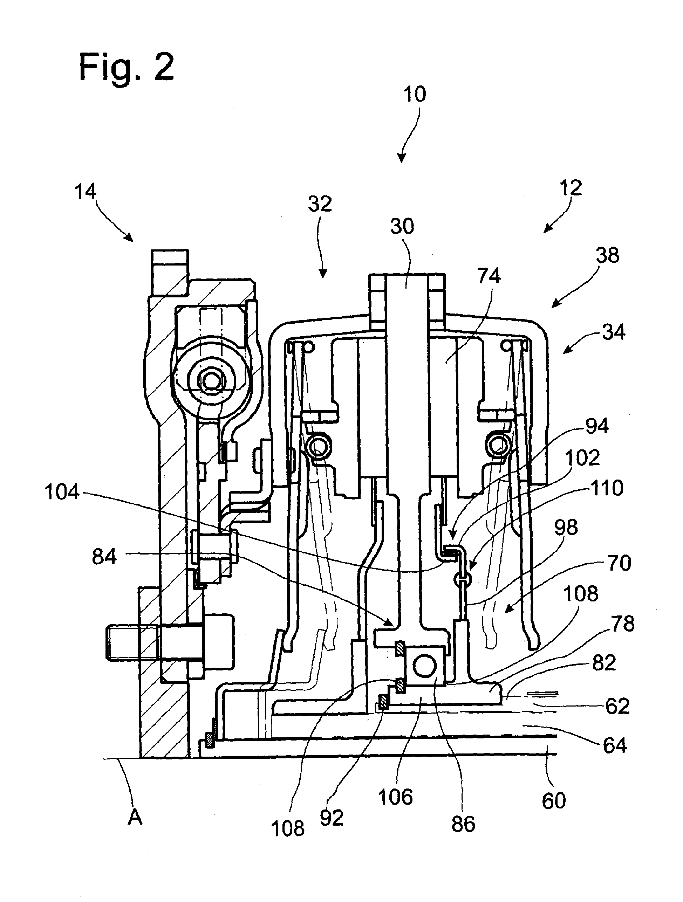

Eine alternative Ausgestaltungsform einer Drehmomentübertragungsanordnung ist in Fig. 2 gezeigt. Der grundsätzliche Aufbau der Doppelkupplungsanordnung 12 und auch der Torsionsschwingungsdämpferanordnung 14 entspricht dem vorangehend Beschriebenen, so dass im Folgenden lediglich auf die insbesondere im Bereich der Kupplungsscheibe 70 und der zentralen Widerlagerplatte 30 vorhandenen Unterschiede eingegangen wird.

Man erkennt, dass die Kupplungsscheibe 70, also diejenige Kupplungsscheibe, bei welcher die Axialbewegungsmittel 94 vorhanden sind, in ihrem Nabenbereich 78 wieder mit größerer axialer Baulänge ausgestaltet ist und einen Lagerungsabschnitt 106 aufweist. Dieser axial längere Nabenbereich 78 ist nunmehr zwischen der Schulter 82 der Abtriebswelle 62 und dem Sicherungsring 92 axial gesichert. Auf dem Lagerungsabschnitt 106 ist nunmehr das Drehentkopplungslager 86 des Lagerungsbereichs 84 der zentralen Widerlagerplatte 30 radial abgestützt. Der Nabenbereich 78 bildet eine Schulter 108, an welcher das Drehentkopplungslager 86 in einer axialen Richtung abgestützt ist. Durch einen weiteren Sicherungsring 108 ist das Drehentkopplungslager 86 in der anderen axialen Richtung bezüglich des Lagerungsabschnitts 106 und somit auch des Nabenbereichs 78 axial gesichert.

Bei dieser Ausgestaltungsform besteht, wie man im Vergleich der Fig. 1 und 2 erkennt, hinsichtlich des erforderlichen axialen Bauraums im Wesentlichen Übereinstimmung, da auch hier der Nabenbereich 78 und der Lagerungsbereich 84 näher axial aneinander heranrücken können, im Falle der Fig. 2 einander sogar axial überlappen. Weiterhin bietet diese Ausgestaltungsvariante den Vorteil, dass die Widerlagerplatte 30 und die Kupplungsscheibe 70 zu einer vormontierten Einheit zusammengefasst werden können. Dies erleichtert den Zusammenbau der Widerlagerplatte 30 mit der Druckplattenbaugruppe 38 und erleichtert weiterhin auf Grund der definierten Positionierung der Kupplungsscheibe 70 im Kupplungsbereich 34 das Zusammenfügen der Doppelkupplungsanordnung 12 mit den beiden Abtriebswellen bzw. Getriebeeingangswellen 62, 64.

Man erkennt weiter in Fig. 2, dass die Kupplungsscheibe 70 eine nur schematisch angedeutete Torsionsschwingungsdämpferanordnung 110 umfasst. Diese kann so aufgebaut sein, wie dies bei in Kupplungsscheiben integrierten Schwingungsdämpfern an sich bekannt ist, also kann eine Dämpferelementenanordnung mit mehreren Dämpferfedern umfassen, die zwischen zwei in Umfangsrichtung bezüglich einander bewegbaren Teilen wirken und somit eine Relativumfangsbewegung zulassen. Zu diesem Zwecke ist, wie in Fig. 2 angedeutet, das mit dem Nabenbereich 78 verbundene oder daran vorgesehene Verbindungselemententeil 98 in zwei Bereiche aufgegliedert, die zur Drehmomentübertragung dann über die Dämpferelementenanordnung gekoppelt sind. Durch das Vorsehen der Torsionsschwingungsdämpferanordnung 10 in der Kupplungsscheibe 70 wird es weiterhin möglich, insbesondere im Bereich geringerer Drehmomente Drehschwingungen zu mindern. Da weiterhin die Torsionsschwingungsdämpferanordnung 110 der Kupplungsscheibe 70 radial innerhalb der Axialbewegungsmittel, also insbesondere der Verzahnungen 102, 104 liegt, wird es möglich, diese Axialbewegungsmittel 94 vergleichsweise weit radial außen anzuordnen, so dass bei zu übertragenden Drehmomenten die zwischen den Verzahnungen 102, 104 auftretenden Reibkräfte geringer sind, als bei Positionierung weiter radial innen. Dies erleichtert die Relativaxialbewegbarkeit im Bereich der Axialbewegungsmittel 94.

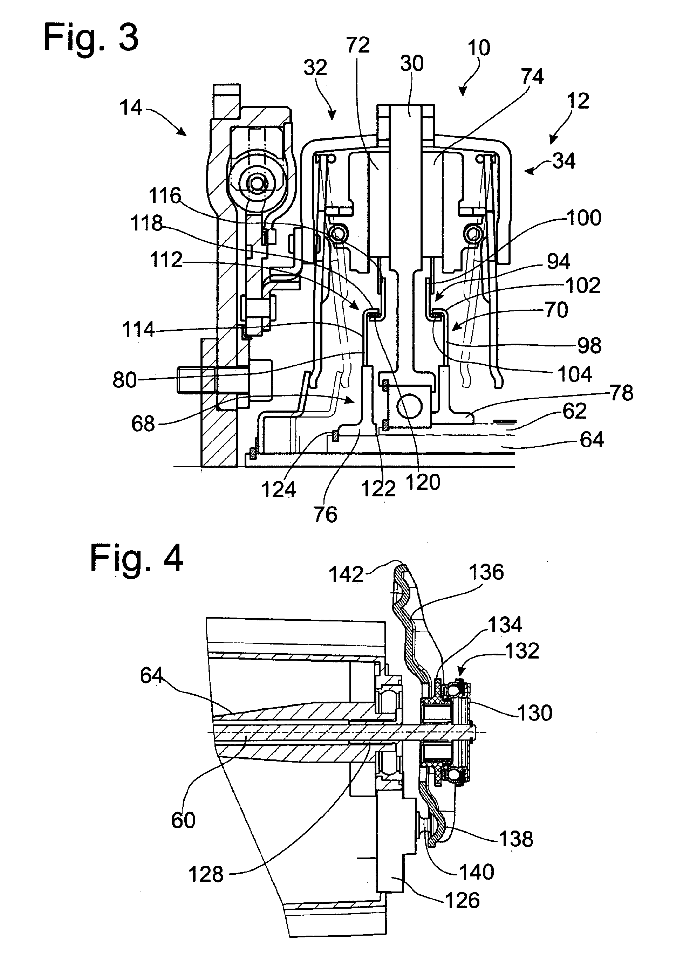

Eine weitere erfindungsgemäße Ausgestaltungsart einer Drehmomentübertragungsanordnung 10 ist in Fig. 3 dargestellt. Auch hier entspricht der grundsätzliche Aufbau dem vorangehend mit Bezug auf die Fig. 1 detailliert beschriebenen Aufbau, so dass auf die diesbezüglichen Ausführungen verwiesen werden kann.

Man erkennt, dass hinsichtlich der Ausgestaltung der Widerlagerplatte 30 und der Kupplungsscheibe 70 der Aufbau dem vorangehend mit Bezug auf die Fig. 1 oder 2 beschriebenen Aufbau gleicht. Nunmehr sind jedoch auch bei der Kupplungsscheibe 68 Axialbewegungsmittel 112 vorgesehen, die eine axiale Entkopplung des Nabenbereichs 76 vom Reibbereich 72 derselben ermöglichen. Auch hier ist vorgesehen, dass das Verbindungselement 80 in zwei Verbindungselemententeile 114, 116 aufgegliedert ist, wobei das Verbindungselemententeil 114 mit dem Nabenbereich 76 verbunden oder integral ausgebildet sein kann, während das Verbindungselemententeil 116 mit dem Reibbereich 72 verbunden sein kann bzw. einen Teil desselben bildet. Die beiden Verbindungselemententeile 114, 116 stellen wiederum Verzahnungen 118, 120 bereit, die miteinander in Kämmeingriff stehen und somit eine im Wesentlichen drehfeste, jedoch eine axial Relativbewegung zwischen dem Nabenbereich 76 und dem Reibbereich 72 zulassende Kopplung realisieren. Man erkennt, dass auch die Kupplungsscheibe 68 nunmehr in ihrem Nabenbereich 76 an der zugeordneten Abtriebswelle bzw. Getriebeeingangswelle 64 axial arretiert ist, nämlich zwischen einer Schulter 122 derselben und einem daran festgelegten Sicherungsring 124.

Das Ausgestalten beider Kupplungsscheiben 68, 78 mit jeweiligen Axialbewegungsmitteln 112, 94 führt zu einer weiteren Verringerung der axialen Baugröße, insbesondere im radial inneren Bereich und ermöglicht somit bei zuverlässigem Betrieb eine sehr kompakte Ausgestaltung der Doppelkupplungsanordnung 12.

In Fig. 4 ist dargestellt, mit welchen Mitteln die Betätigung des zwischen der Widerlagerplatte 30 und der Torsionsschwingungsdämpferanordnung 14 liegenden Kupplungsbereichs 32 erfolgen kann. Man erkennt ein nur teilweise dargestelltes Getriebegehäuse 126, an welchem die koaxial innere Abtriebswelle bzw. Getriebeeingangswelle 64 an ihrem von der Kopplung mit der Kupplungsscheibe 68 entfernten Ende drehbar gelagert ist. Man erkennt weiterhin, das sich in der Welle 64 erstreckende stangenartige Betätigungselement 60, das über das axiale Ende der Welle 64 hinaussteht und dort beispielsweise über ein Gleitlager 128 drehbar geführt ist. In diesem Endbereich ist mit dem Betätigungselement 60 eine Scheibe 130 axial gekoppelt, an welcher ein Drehentkopplungslager 132 axial abgestützt ist. Ein ringartiges Übertragungselement 134, das in einem radial inneren Bereich weiterhin auf dem Betätigungselement 60 zentriert ist, ist in Kontakt mit dem Drehentkopplungslager 132 und ist durch ein hebelartiges Betätigungselement 136 beaufschlagbar. Dieses Betätigungselement 136 stützt sich in einem Endbereich 138 über ein knopfartiges Lagerungselement 140 am Getriebegehäuse 126 ab und kann in seinem anderen Endbereich 142 eine Betätigungskraft, beispielsweise von einem Hydrauliksystem oder über einen Bowdenzug, einen Stößel oder dergleichen, aufnehmen. Bei Verschwenken des hebelartigen Betätigungselements 36 im Uhrzeigersinn in der Darstellung der Fig. 4, also in Richtung vom Getriebegehäuse 126 weg, wird der Ring 134 gegen das Drehentkopplungslager 132 gepresst, welches wiederum das scheibenartige Übertragungselement 130 beaufschlagt und somit das Betätigungselement 60 in der Darstellung der Fig. 4 nach rechts zieht. Dabei bewegt sich also das Betätigungselement 60 in der koaxial inneren Abtriebswelle 64 so, wie vorangehend mit Bezug auf die Fig. 1 beschrieben, dass durch die Wechselwirkung mit der Kraftbeaufschlagungsanordnung 52 der Kupplungsbereich 32 in seinen Einrückzustand gebracht wird. Es wird also hier zum Einrücken bzw. bei Übertragung der Betätigungskräfte ziehend am stangenartigen Betätigungselement angegriffen, was eine Überlastung desselben, die zu Ausweichbewegungen führen könnte, vermeidet.

Es ist selbstverständlich, dass, ohne von den Prinzipien der vorliegenden Erfindung abzuweichen, beim vorangehend in verschiedenen Variationen beschriebenen Aufbau noch weitere Änderungen vorgenommen werden können. So ist es selbstverständlich auch möglich, lediglich bei dem zwischen der Widerlagerplatte 30 und der Torsionsschwingungsdämpferanordnung 14 angeordneten Kupplungsbereich 32 Axialbewegungsmittel in der zugeordneten Kupplungsscheibe vorzusehen. Selbstverständlich können auch in beiden Kupplungsscheiben Torsionsschwingungsdämpferanordnungen vorgesehen sein. Auch ist es selbstverständlich möglich, dass die Verzahnungen der Axialbewegungsmittel in anderer Art und Weise ausgestaltet sein können, als die dargestellten Stirnverzahnungen. Auch eine Umkehr von Außenverzahnung und Innenverzahnung ist denkbar.

## Patentansprüche

1. Drehmomentübertragungsanordnung für den Antriebsstrang eines Fahrzeugs, umfassend eine Doppelkupplungsanordnung (12) mit einer zentralen Widerlagerplatte (30) und an beiden axialen Seiten der Widerlagerplatte (30) jeweils einem Kupplungsbereich (32, 34), wobei jeder Kupplungsbereich (32, 34) eine Kupplungsscheibe (68, 70) umfasst und jede der Kupplungsscheiben (68, 70) mit einer von zwei koaxial zueinander angeordneten Abtriebswellen (64, 62) im Wesentlichen drehfest gekoppelt oder zu koppeln ist, wobei die Widerlagerplatte (30) einen radial innen liegenden Lagerungsbereich (84) aufweist, mit welchem sie bezüglich einer der Abtriebswellen (64, 62) gelagert ist,
**dadurch gekennzeichnet, dass** wenigstens eine der Kupplungsscheiben (68, 70) zwischen einem radial äußeren Reibbereich (72, 74) und einem radial inneren Nabenbereich (76, 78) Axialbewegungsmittel (112, 94) umfasst, welche eine Relativaxialbewegung des Reibbereichs (72, 74) bezüglich des Nabenbereichs (76, 78) zulassen.

2. Drehmomentübertragungsanordnung nach Anspruch 1,
**dadurch gekennzeichnet, dass** wenigstens diejenige Kupplungsscheibe (70) Axialbewegungsmittel (94) aufweist, welche mit der einen (62) der Abtriebswellen (64, 62) gekoppelt oder zu koppeln ist.

3. Drehmomentübertragungsanordnung nach Anspruch 1 oder 2,
**dadurch gekennzeichnet, dass** die Axialbewegungsmittel (112, 94) am Reibbereich (72, 74) und am Nabenbereich (76, 78) jeweils eine Verzahnung (104, 102, 120, 118) umfassen, wobei bei hergestelltem Kämmeingriff der Verzahnungen (104, 102, 120, 118) der Reibbereich (72, 74) und der Nabenbereich (76, 78) zur gemeinsamen Drehung bei ermöglichter Relativaxialbewegung gekoppelt sind.

4. Drehmomentübertragungsanordnung nach Anspruch 2 oder Anspruch 3, sofern auf Anspruch 2 rückbezogen,
**dadurch gekennzeichnet, dass** der Lagerungsbereich (84) der Widerlagerplatte (30) axial folgend auf den Nabenbereich (78) der mit der einen Abtriebswelle (62) gekoppelten oder zu koppelnden Kupplungsscheibe (70) an der einen Abtriebswelle (62) gelagert ist.

5. Drehmomentübertragungsanordnung nach Anspruch 2 oder Anspruch 3, sofern auf Anspruch 2 rückbezogen
**dadurch gekennzeichnet, dass** die mit der einen Abtriebswelle (62) gekoppelte oder zu koppelnde Kupplungsscheibe (70) einen Lagerungsabschnitt (106) aufweist, an welchem der Lagerungsbereich (84) der Widerlagerplatte (30) gelagert ist.

6. Drehmomentübertragungsanordnung nach einem der Ansprüche 1 bis 5,
**dadurch gekennzeichnet, dass** der Lagerungsbereich (84) der Widerlagerplatte (30) bezüglich der einen Abtriebswelle (62) im Wesentlichen axial unbewegbar gehaltert ist.

7. Drehmomentübertragungsanordnung nach einem der Ansprüche 1 bis 6,
**dadurch gekennzeichnet, dass** die eine Abtriebswelle (62) die koaxial äußere Abtriebswelle (62) ist.

8. Drehmomentübertragungsanordnung nach einem der Ansprüche 1 bis 7,
**dadurch gekennzeichnet, dass** beide Kupplungsscheiben (68,78) Axialbewegungsmittel (112, 94) aufweisen.

9. Drehmomentübertragungsanordnung nach einem der Ansprüche 1 bis 8,
**dadurch gekennzeichnet, dass** bei wenigstens einer Kupplungsscheibe (70) radial innerhalb von daran vorgesehenen Axialbewegungsmitteln (94) eine Torsionsschwingungsdämpferanordnung (110) vorgesehen ist.

10. Drehmomentübertragungsanordnung nach einem der Ansprüche 1 bis 9,
**dadurch gekennzeichnet, dass** die Doppelkupplungsanordnung (12) über eine Schwungmassenanordnung (14) mit einem Antriebsorgan gekoppelt oder zu koppeln ist.

11. Drehmomentübertragungsanordnung nach Anspruch 10,
**dadurch gekennzeichnet, dass** die Schwungmassenanordnung (14) eine Torsionsschwingungsdämpferanordnung (110) umfasst.

12. Drehmomentübertragungsanordnung nach einem der Ansprüche 1 bis 11,
**dadurch gekennzeichnet, dass** jeder Kupplungsbereich (32, 34) eine Druckplattenbaugruppe (36, 38) umfasst, wobei jede Druckplattenbaugruppe (36, 38) ein an der Widerlagerplatte (30) festgelegtes oder festzulegendes Gehäuse (40, 42), eine bezüglich des Gehäuses (40, 42) im Wesentlichen drehfest und axial bewegbare Anpressplatte (48, 50) sowie eine bezüglich der Anpressplatte (48, 50) und des Gehäuses (40, 42) abgestützte Kraftbeaufschlagungsanordnung (52, 54) umfasst.
